# FASCICULE DE BREVET EUROPEEN

(11) **EP 1 747 935 B1**
(45) Date de publication et mention de la délivrance du brevet: **27.04.2011**
(21) Numéro de dépôt: 06116938.9
(22) Date de dépôt: 11.07.2006
(51) Int. Cl.: B60N 2/07

(54) **Ensemble coulissant et ensemble de mobilier coulissant pour habitacle de véhicule**
Gleitanordnung und Möbelstück mit Gleitanordnung für Fahrzeuginnenraum
Slide assembly and furniture with slide assembly for vehicle interior

(30) Priorité: 28.07.2005 FR 0508060
(43) Date de publication de la demande: 31.01.2007
(73) Titulaire: Euramax Industries S.A., 49260 Montreuil-Bellay (FR)
(72) Inventeur: Metreau, Cyril, 49000 Angers (FR)
(74) Mandataire: Maillet, Alain

(56) Documents cités:
- EP-A- 1 241 045
- EP-A- 1 407 920
- DE-A1- 4 410 816
- FR-A- 1 530 540
- FR-A- 2 566 070
- FR-A- 2 822 770
- JP-A- 7 108 864
- US-A- 2 780 501
- US-A- 6 113 051
- PATENT ABSTRACTS OF JAPAN vol. 2002, no. 11, 6 novembre 2002 (2002-11-06) & JP 2002 211281 A (JOHNSON CONTROLS AUTOMOTIVE SYSTEMS CORP), 31 juillet 2002 (2002-07-31)

## Description

L'invention concerne un ensemble coulissant, en particulier pour habitacle de véhicule, comportant au moins un rail longitudinal et au moins un coulisseau comprenant une paire de mâchoires latérales contenant chacune une pluralité de billes aptes à rouler contre le rail pour permettre un déplacement du coulisseau le long du rail, et un ensemble de mobilier coulissant pour habitacle de véhicule, dont le rail est apte à être monté sur une paroi de l'habitacle du véhicule et l'élément de mobilier est relié au coulisseau.

L'invention concerne un ensemble coulissant qui permet de faire coulisser un élément du mobilier, en particulier un siège, dans un habitacle du véhicule par coulissement d'un coulisseau contre un rail préférentiellement fixé au plancher du véhicule.

De tels ensembles coulissants sont connus, en particulier du document FR 2 822 770, dans lequel les moyens de coulissement pour un élément de mobilier formant une console comportent d'une part, un rail sur lequel est fixée ladite console et qui est équipé de deux rainures latérales et, d'autre part, un chariot fixé à une paroi, en l'espèce au plancher d'un véhicule et qui comporte une série de galets alignés selon une direction longitudinale. Le coulissement est obtenu par coopération de ces galets avec les rainures du rail pour permettre un mouvement de roulement du rail par rapport au chariot.

Cependant, des jeux de fonctionnement entraînant des gênes lors de la manoeuvre de coulissement roulement, en particulier du bruit et des instabilités, qui se trouvent accentués par les vibrations liées au déplacement du véhicule à l'intérieur duquel se trouve l'ensemble, sont présents au sein de ces moyens de coulissement connus, en particulier à cause du positionnement des galets sur le rail.

Du document EP 1 241 045, on connaît un ensemble coulissant, qui montre les caractéristiques du préambule de la revendication 1.

Le but de l'invention est de fournir un ensemble coulissant qui permet d'assurer un contact permanent entre le coulisseau et le rail, de sorte que le coulissement puisse s'effectuer sensiblement sans jeu et ainsi réduire le bruit en cours de fonctionnement.

Ce but de l'invention est atteint par le fait que les mâchoires d'un coulisseau sont articulées l'une par rapport à l'autre, et que le coulisseau comporte en outre des moyens de pression élastiques agissant sur chacune des mâchoires du coulisseau pour assurer un contact entre au moins une bille de chaque mâchoire du coulisseau et le rail.

On comprend qu'au sein de chaque coulisseau, grâce à l'articulation des mâchoires l'une par rapport à l'autre, et aux moyens de pression élastiques agissant sur chacune de ces mâchoires, au moins une bille de chaque mâchoire est en contact permanent, ponctuel ou linéaire annulaire, par rapport au rail.

Le coulissement est obtenu par rotation des billes maintenues dans les mâchoires par des cages, ces dernières étant maintenues en pression sur une paroi du rail, par l'intermédiaire des moyens de pression élastiques. En conséquence, les jeux de fonctionnement sont très nettement réduits, de sorte que les nuisances sonores sont quasiment inexistantes.

Le rail présente préférentiellement au moins une partie courbe dans laquelle le coulisseau se déplace.

Le système coulissant de la présente invention présente l'avantage de pouvoir être utilisé avec des rails présentant des parties courbes, qui peuvent en outre être de différentes courbures. En effet, on comprend que le système étant articulé, les moyens de pression élastiques régulent automatiquement la pression à exercer sur les mâchoires pour qu'au moins une bille de chaque mâchoire soit toujours au contact avec le rail, même si le rail présente des courbures. Il est entendu que la courbure du rail peut être dans le plan du rail ou que le rail lui-même peut se présenter sous la forme d'un toboggan incliné présentant des parties courbes dans le plan du toboggan et/ou par rapport à la direction de l'inclinaison.

Préférentiellement, le coulisseau comporte deux mâchoires et chaque mâchoire comporte deux billes. Ainsi, le coulisseau comporte dans ce cas, deux rangées de deux billes.

On comprend que l'homme du métier saura choisir la dimension du coulisseau et le nombre de billes par mâchoire, en fonction de la courbure (ou des courbures) du rail.

L'invention sera bien comprise et ses avantages apparaîtront mieux à la lecture de la description détaillée qui suit, de modes de réalisation de l'invention représentés à titre d'exemples non limitatifs.

La description se réfère aux dessins annexés sur lesquels :
- la figure 1 représente une vue en perspective d'un ensemble de mobilier coulissant comportant deux ensembles coulissants selon l'invention,
- la figure 2 représente une vue en élévation en bout d'un ensemble coulissant de la figure 1 selon la ligne II-II,
- la figure 3 représente en vue de dessus le coulisseau de la figure 2 selon la ligne III,
- la figure 4 représente une vue en perspective éclatée du coulisseau de la figure 3 selon la ligne V-V,
- la figure 5 représente une vue en coupe partiellement arrachée du coulisseau seul, et
- la figure 6 représente une vue de dessus des deux ensembles coulissants de la figure 1.

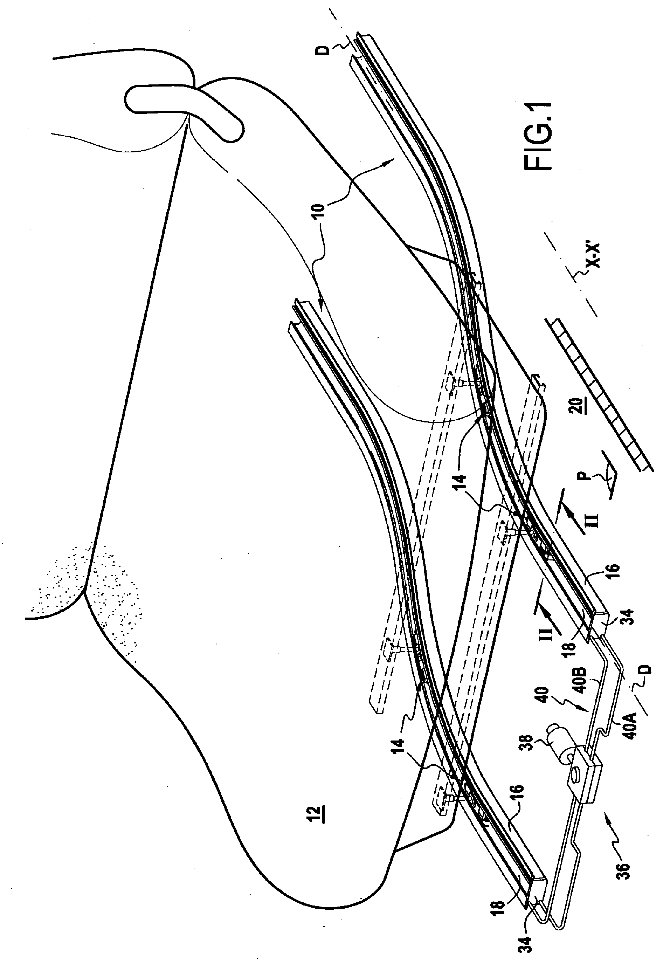

La figure 1 représente un ensemble de mobilier coulissant pour habitacle de véhicule comportant préférentiellement deux ensembles coulissants 10 et un élément de mobilier, en l'espèce un siège de véhicule 12, relié aux coulisseaux 14 de chacun des deux ensembles coulissants 10, comme décrit plus en détails par la suite.

Selon le type d'élément de mobilier à faire coulisser, on comprend que l'ensemble de mobilier coulissant pourrait ne comporter qu'un seul ensemble coulissant 10 comportant un rail et un coulisseau ou au contraire, comporter plus de deux ensembles coulissants 10.

Dans tous les cas, chaque ensemble coulissant 10 comporte un rail longitudinal 16 qui comporte préférentiellement une rainure 18 longitudinale, à l'intérieur de laquelle les billes (non visibles) des coulisseaux 14 sont aptes à se déplacer. Comme décrit plus en détails par la suite, le rail longitudinal 16 présente préférentiellement au moins une partie courbe dans laquelle le coulisseau se déplace.

En fait, on comprend que le rail s'étend globalement dans une direction rectiligne d'axe X-X', tout en présentant éventuellement des tronçons courbes. Le rail suit une ligne D le long de laquelle le coulisseau se déplace. Il s'ensuit que lorsque le rail est totalement rectiligne, la ligne D est elle aussi rectiligne et est parallèle avec l'axe X-X'.

Les deux rails illustrés sur la figure 1 étant semblables, un seul rail est décrit pour toute la suite.

Le rail 16 représenté, est plan dans un plan correspondant sensiblement au plan P d'une paroi 20 d'un habitacle d'un véhicule (non représenté) et est fixé par des moyens connus à cette paroi 20, en l'espèce au plancher 20 de l'habitacle du véhicule dans lequel l'ensemble coulissant est agencé.

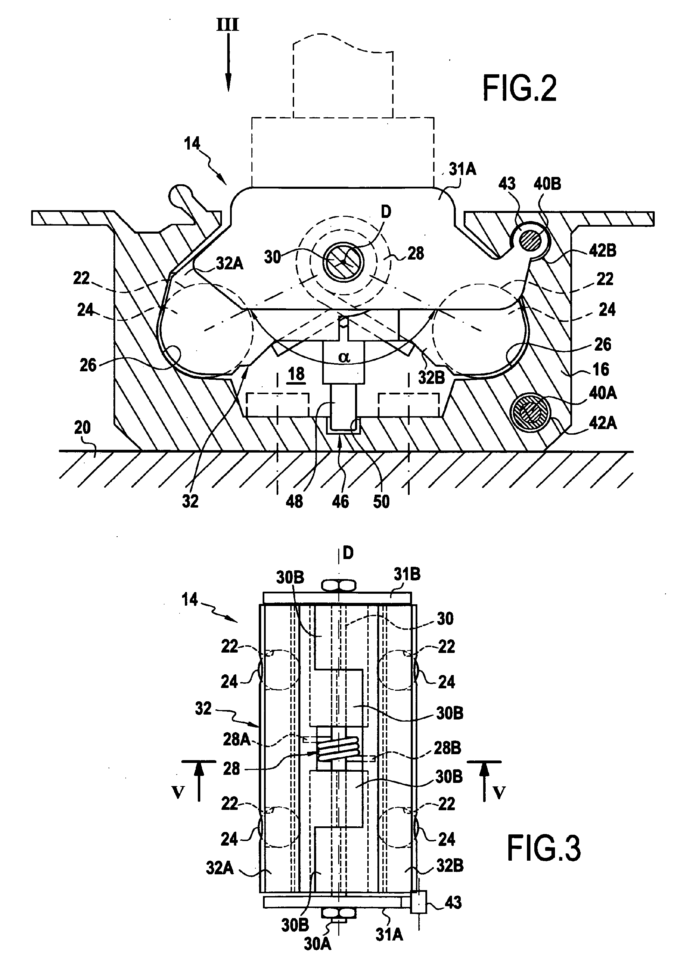

La rainure 18 du rail 16 bien visible sur la figure 2, permet de loger au moins en partie le coulisseau 14. En l'espèce, en référence aux figures 2 à 4, le coulisseau 14 qui s'étend sensiblement longitudinalement, comporte des cages 22 formées dans une paire de mâchoires 32, dans lesquelles sont logées des billes 24 alignées en série qui débordent en dehors des mâchoires 32 pour être en contact par pression à l'aide de moyens de pression élastiques 28, avec au moins une portion de paroi 26 formée dans la rainure 18.

En fait, le coulisseau 14 comporte une paire 32 de deux mâchoires 32A et 32B latérales, qui sont articulées par une articulation formant pivot longitudinal 30, qui comporte en l'espèce une tige 30A sensiblement rectiligne et des logements 30B formés dans les mâchoires 32A et 32B et, chaque mâchoire 32A, 32B comporte préférentiellement au moins deux cages 22 alignées dans la direction longitudinale du coulisseau 14.

L'ensemble formé par les mâchoires 32A et 32B, les moyens de pression élastiques 28 et la tige 30A, est relié et maintenu ensemble par des moyens de maintien 31 qui comportent deux platines 31A et le 31B coiffant chaque extrémité des mâchoires 32A et 32B. Chaque platine 31A et 31B est percée par un perçage 31C permettant le passage de la tige 30A et son serrage contre les platines 31A et 31B, à l'aide d'un écrou 33.

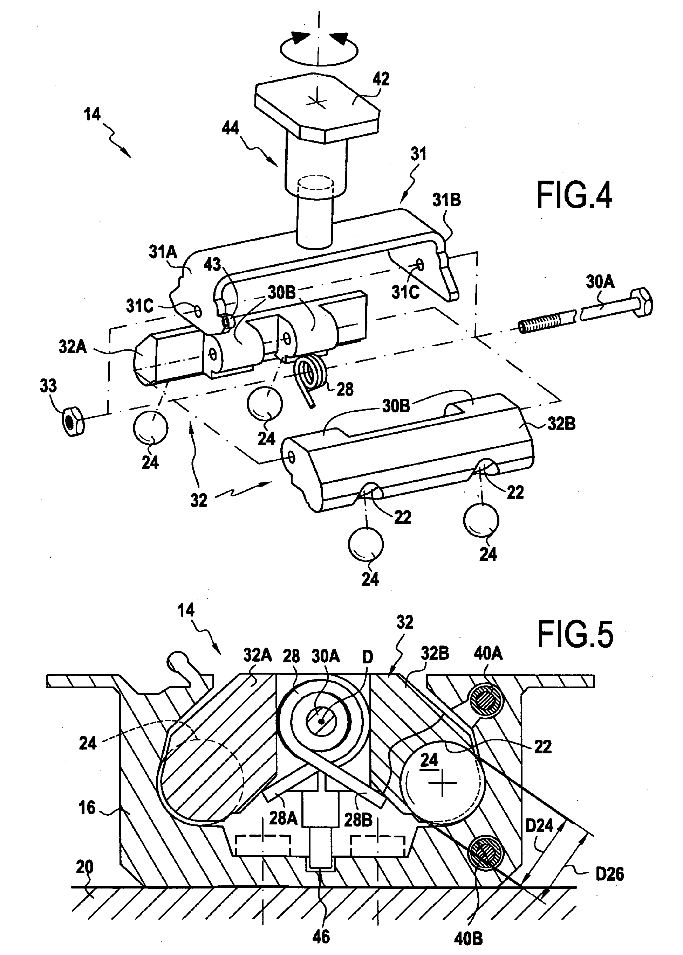

Vus en section transversale sur la figure 5, les billes 24 et les moyens de pression élastiques, en l'espèce un ressort 28, sont agencés en V, le ressort 28 étant disposé au pied du V et les billes 24 de chacune des mâchoires 32A et 32B étant disposées respectivement à chaque extrémité du V.

Le ressort 28 permet de déplacer les billes 24 des cages 22 de l'une des mâchoires, par exemple 32A, par rapport aux billes 24 des cages 22 de l'autre des mâchoires 32B, pour assurer un contact entre au moins une bille 24 de chaque mâchoire 32A et 32B, et le rail 16.

En l'espèce, le rail 16 est préférentiellement symétrique par rapport à la ligne D de déplacement du coulisseau 14, et comporte deux portions de paroi 26 symétriques contre lesquelles les billes 24 de chacune des deux mâchoires 32A et 32B sont respectivement aptes à être en contact à l'intérieur du rail 16.

En fait, le coulisseau 14 est sensiblement longitudinal et l'axe du ressort 28 qui est confondu avec l'axe de l'articulation formant pivot 30, en l'espèce l'axe de la tige 30A, correspond en coupe transversale au pied du V. A l'échelle des éléments formant le coulisseau 14, l'axe du ressort 28 et l'axe de l'articulation formant pivot 30 sont sensiblement parallèles à la direction D formés de tronçons qui localement peuvent être considérés comme rectilignes.

Le ressort 28 permet de déplacer les billes 24 des cages 22 de l'une des mâchoires 32A, par rapport aux billes 24 des cages 22 de l'autre des mâchoires 32B en les écartant. Ainsi, les billes 24 logées dans la paire de mâchoires 32 sont écartées d'un angle α qui varie de manière élastique pour assurer le contact entre au moins une bille 24 de chaque mâchoire 32A et 32B, et le rail 16. Au repos, grâce à l'effet du ressort 28, cet angle α est fixe et est préférentiellement compris entre 45° et 135°, préférentiellement sensiblement égal à 90°, par rapport à cet axe du ressort 28. Lorsque le coulisseau est en cours de coulissement, l'angle α varie légèrement, préférentiellement de plus ou moins 10°, autour de sa valeur fixe.

On comprend qu'il peut être prévu que le coulisseau coulisse par dessus le rail en le chevauchant, auquel cas le ressort aurait le même rôle que celui précité, mais en sens inverse, et tendrait à rapprocher les deux mâchoires vers le rail pour assurer un contact des billes de chacune des mâchoires contre des portions de faces extérieures du rail.

Le ressort 28 est un ressort hélicoïdal 28 comprenant une première extrémité 28A libre qui coopère avec l'une des deux mâchoires 32, en l'espèce la mâchoire 32A, et une deuxième extrémité libre 28B qui coopère avec l'autre des deux mâchoires 32B.

De manière plus précise, les cages 22 contenant les billes 24 sont elles-mêmes respectivement formées dans les deux mâchoires 32A et 32B reliées ensemble par l'articulation formant pivot longitudinal 30 et écartées l'une de l'autre par le ressort 28 dont les première et deuxième extrémités libres 28A et 28B coopèrent respectivement avec les deux mâchoires 32A et 32B. De préférence, chaque mâchoire 32A, 32B comporte deux cages 22 alignées le long de la direction D de déplacement du coulisseau 14.

Ainsi, on comprend que par la pression exercée par le ressort 28 sur les cages 22, par l'intermédiaire des mâchoires 32A et 32B, au moins une bille 24 de chaque mâchoire 32A, 32B est en contact avec la portion de paroi 26 de la rainure 18.

En effet, le ressort 28 agit préférentiellement sur les cages 22 en écartant les billes 24 de l'une des mâchoires 32A des billes 24 de l'autre des mâchoires 32B, de sorte que les billes 24 restent en contact avec les parois de la rainure 18.

Les mâchoires 32A et 32B coopèrent l'une avec l'autre par l'intermédiaire de l'articulation formant pivot 30 et sont disposées dans la rainure 18 du rail 16 de sorte que leurs billes 24 soient en contact avec la rainure 18. Préférentiellement, la rainure 18 comporte plusieurs portions de paroi qui forment un logement intérieur dans lequel le coulisseau 14 est apte à se déplacer et qui forment des surfaces de retenue limitant l'écartement des mâchoires 32A, 32B, l'une par rapport à l'autre.

En effet, la portion de paroi 26 contre laquelle les billes 24 coulissent, a une forme complémentaire qui vient coiffer sensiblement toute la partie de billes 24 qui dépasse hors des cages 22. Ainsi, les portions de paroi 26 forment préférentiellement des gorges sensiblement semi-cylindriques de diamètre D26 légèrement supérieur au diamètre D24 des billes 24 et s'étendent le long du rail 16 à l'intérieur de la rainure 18. On comprend que ces gorges pourraient aussi être angulaires et présenter des portions de parois planes.

Des billes supplémentaires (non représentées) peuvent être prévues dans chacune des deux mâchoires, pour garantir le contact entre les billes de chaque coulisseau et le rail, même en cas de choc important, par exemple en cas d'accident. Ainsi, le nombre de billes présentes dans chaque rangée peut être de plus que deux et/ou le nombre de rangées de billes présentes dans chaque mâchoire, peut être augmenté.

Dans ce dernier cas, on comprend qu'une rangée supplémentaire de billes peut être prévue dans chaque mâchoire, les deux rangées étant alors alignées l'une au dessus de l'autre. Ainsi, la rangée « basse » de billes est en contact avec une portion de paroi de rail, dans une direction inclinée sensiblement vers le bas du rail, comme les billes 24 décrites précédemment, tandis que la rangée « supérieure », correspondant à la rangée supplémentaire, vient en contact avec une autre portion de paroi de rail, dans une direction inclinée sensiblement vers le haut du rail.

Vues en coupe transversale, les billes du coulisseau ne sont plus disposées le long d'un V, mais plutôt d'un X, dont le centre contient l'articulation formant pivot et chaque extrémité des branches du X contient une rangée de billes. L'écartement entre la paire de rangées « basse » de billes peut être différent de celui entre la paire de rangées « haute » de billes. En l'espèce, un deuxième ressort peut être prévu, de sorte que l'un des deux ressorts écarte élastiquement préférentiellement la paire de rangées « basse », tandis que l'autre ressort écarte élastiquement la paire de rangées « haute ».

En outre, comme illustré sur la figure 1, l'ensemble coulissant 10 peut comporter des moyens formant butée de fin de course 34 pour le coulisseau 14.

De même, l'ensemble coulissant 10 comporte préférentiellement des moyens de déplacement 36 pour déplacer le coulisseau 14 le long du rail 16. En l'espèce, les moyens de déplacement 36 sont des moyens connus, qui comportent par exemple, un moteur 38 et un câble de transmission 40 qui est relié au coulisseau 14 et qui est actionné par ledit moteur 38.

Selon que l'ensemble coulissant 10 comporte un ou plusieurs coulisseau(x) par rail 16, le câble de transmission 40 peut être relié à chacun des coulisseaux 14 ou au moins à l'un d'entre eux. De même, lorsque l'ensemble de mobilier coulissant comporte une pluralité d'ensembles coulissants 10, une pluralité de moteurs 38 respectivement reliés à chacun des ensembles coulissants 10 peut être prévue ou un seul moteur 38 peut commander la pluralité de câbles de transmission 40 reliés aux coulisseaux 14 respectifs.

Le câble de transmission 40 comporte préférentiellement un brin mené 40A logé dans une première gorge 42A formée dans le rail 16 et un brin menant 40B relié fixement à une protubérance 43 formée sur une portion de la platine 31A qui est préférentiellement apte à glisser dans une seconde gorge 42B formée dans le rail 16.

Le dispositif peut en outre comporter des moyens formant guidage pour le câble 40. En l'espèce, ces moyens formant guidage comportent outre les première et seconde gorges 42A et 42B, les moyens formant butée de fin de course 34 qui jouent préférentiellement le rôle de guidage à l'extrémité du rail 16.

Comme nous l'avons déjà indiqué, l'ensemble de mobilier coulissant peut comporter un ou plusieurs ensembles coulissants. En outre, chaque ensemble coulissant peut comporter un ou plusieurs coulisseaux 14 reliés entre eux par des moyens formant liaison. Ces moyens formant liaison comportent préférentiellement une liaison choisie parmi les liaisons rotule et pivot longitudinal.

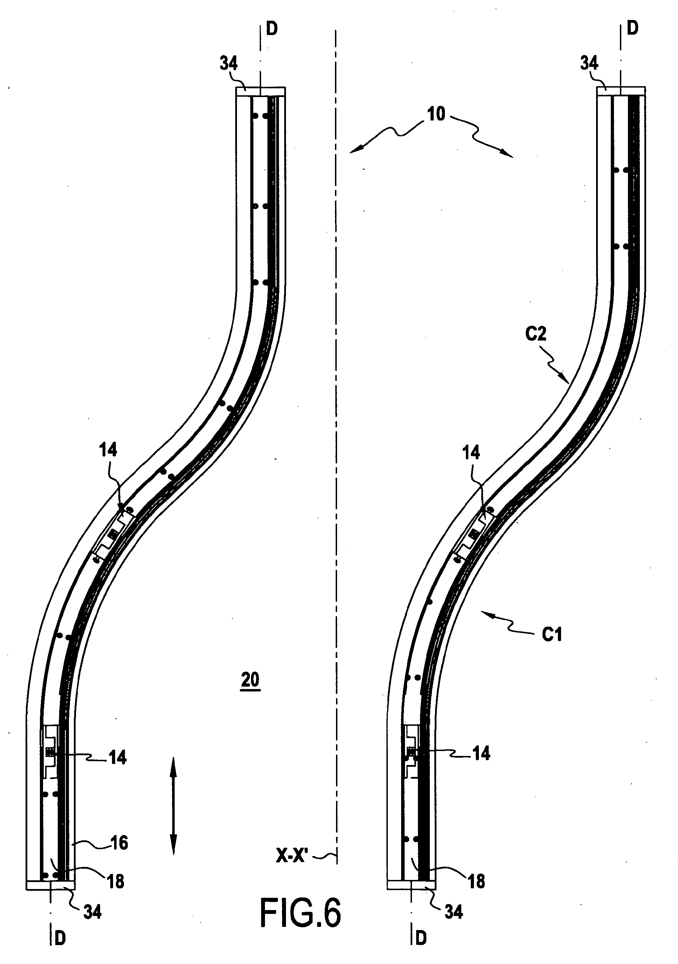

Ces moyens de liaison sont choisis pour que les coulisseaux soient aptes à coulisser dans le rail, même lorsque ce dernier présente préférentiellement au moins une partie courbe, telle qu'illustré par exemple sur la figure 6. En l'espèce, chacun des rails 16 présente des courbures C1 et C2 et le ressort 28 permet une auto-régulation de la pression à exercer sur les paires de mâchoires 32 de chaque coulisseau pour qu'au moins une bille de chaque mâchoire du coulisseau soit toujours au contact avec le rail correspondant.

Le rail illustré sur la figure 6 présente des courbures qui restent dans le plan P, mais on comprend que le rail lui-même pourrait se présenter sous la forme d'un toboggan incliné (non représenté) présentant des parties courbes dans le plan du toboggan et/ou dans la direction de l'inclinaison.

Ces moyens formant liaison sont des moyens connus qui peuvent être disposés entre chaque coulisseau 14 pour former un chapelet de coulisseaux 14 qui sont soit reliés directement l'un à l'autre par ces moyens formant liaison (non représenté), soit reliés indirectement l'un à l'autre par l'intermédiaire de platines 42 fixées au siège de véhicule 12 (voir figures 1 et 4). Dans ce cas, les moyens formant liaison 44 sont disposés entre chacune des platines 42 et les moyens de maintien 31. Dans ce cas, chaque ressort 28 permet de réguler la pression à exercer sur les paires de mâchoires 32 de chaque coulisseau pour qu'au moins une bille de chaque mâchoire de l'un des coulisseaux du chapelet soit toujours au contact avec le rail. Ainsi, lorsque l'ensemble de mobilier coulissant comporte une pluralité d'ensembles coulissants comprenant chacun un chapelet de coulisseaux, chaque chapelet est régulé de manière autonome par rapport aux autres, pour garantir au moins un contact contre le rail correspondant.

Afin de bloquer le siège en position, l'ensemble coulissant comporte en outre préférentiellement des moyens de blocage du coulisseau par rapport au rail. Ces moyens de blocage 46 du type connu, peuvent par exemple comporter un (ou plusieurs) doigt 48 qui est apte à venir se loger dans un logement 50 prévu à cet effet dans le rail 16. On comprend que lorsque le doigt 48 est bloqué dans le logement 50, le coulisseau ne peut pas se déplacer, tandis que lorsque le doigt 48 est dégagé du logement 50, le coulisseau 14 peut coulisser dans le rail 16.

Les moyens de blocage ne sont pas obligatoirement verticaux, tels qu'illustrés sur la figure 2, mais ils peuvent aussi être inclinés, même être horizontaux et ils peuvent venir se loger dans n'importe quelle paroi fixe du rail 16 prévue à cet effet.

Le doigt 48 peut être bloqué/débloqué dans le logement 50, de manière manuelle ou à l'aide de moyens automatiques (non représenté).

Dans le cas particulier où l'ensemble de mobilier coulissant comporte des moyens de déplacement ayant un moteur tels que précités, il peut être prévu que le doigt 48 soit commandé automatiquement en fonction de commande du moteur.

Chaque coulisseau 14, et en particulier les billes 24 et la paire de mâchoires 32 qui le composent, ainsi que le rail 16, peuvent être en différents matériaux, choisis préférentiellement parmi les matières plastiques et/ou métalliques.

## Revendications

1. Ensemble coulissant, en particulier pour habitacle de véhicule, comportant au moins un rail longitudinal (16) et au moins un coulisseau (14) comprenant une paire de mâchoires (32, 32A, 32B) latérales contenant chacune une pluralité de billes (24) aptes à rouler contre le rail (16) pour permettre un déplacement du coulisseau (14) le long du rail (16),
**caractérisé en ce que** les mâchoires (32A, 32B) du coulisseau (14) sont articulées l'une par rapport à l'autre, et
**en ce que** le coulisseau comporte en outre des moyens de pression élastiques (28) agissant sur chacune des mâchoires (32A, 32B) du coulisseau (14) pour assurer un contact entre au moins une bille (24) de chaque mâchoire (32A, 32B) du coulisseau (14) et le rail (16).

2. Ensemble coulissant selon la revendication précédente, **caractérisé en ce que** le rail (16) présente au moins une partie courbe (C1, C2) dans laquelle le coulisseau (14) se déplace.

3. Ensemble coulissant selon la revendication 1 ou 2, **caractérisé en ce que** les mâchoires (32, 32A, 32B) du coulisseau (14) sont articulées par une articulation formant pivot longitudinal (30, 30A, 30B).

4. Ensemble coulissant selon l'une quelconque des revendications précédentes, **caractérisé en ce que** les moyens de pression élastiques (28) comportent un ressort (28) permettant de déplacer les billes (24) de l'une des mâchoires (32A, 32B) par rapport aux billes (24) de l'autre des mâchoires (32A, 32B), pour assurer un contact entre au moins une bille (24) de chaque mâchoire (32A, 32B) et le rail (16).

5. Ensemble coulissant selon la revendication précédente, **caractérisé en ce que** le ressort est un ressort hélicoïdal (28) comprenant une première extrémité libre (28A) qui coopère avec l'une des deux mâchoires (32A) et une deuxième extrémité libre (28B) qui coopère avec l'autre des deux mâchoires (32B).

6. Ensemble coulissant selon l'une quelconque des revendications précédentes, **caractérisé en ce que** le rail (16) comporte une rainure (18) à l'intérieur de laquelle les billes (24) sont aptes à se déplacer, au moins une bille (24) de chaque mâchoire (32A, 32B) étant en contact avec une paroi (26) de la rainure (18).

7. Ensemble coulissant selon les revendications 4 et 5, **caractérisé en ce que** le ressort (28) agit sur les mâchoires (32, 32A, 32B) en écartant les billes (24) de l'une des mâchoires (32A, 32B) des billes (24) de l'autre des mâchoires (32A, 32B), de sorte que les billes (24) restent en contact avec les parois de la rainure.

8. Ensemble coulissant selon la revendication 4, **caractérisé en ce qu'**en section transversale les billes (24) et le ressort (28) sont agencés en V, le ressort (28) étant disposé au pied du V et les billes (24) de chacune des mâchoires (32A, 32B) étant disposées respectivement à chaque extrémité du V.

9. Ensemble coulissant selon l'une quelconque des revendications précédentes, **caractérisé en ce que** le coulisseau (14) comporte deux mâchoires (32, 32A, 32B) et **en ce que** chaque mâchoire (32A, 32B) comporte deux billes (24).

10. Ensemble coulissant selon l'une quelconque des revendications précédentes, **caractérisé en ce qu'**il comporte en outre des moyens formant butée de fin de course (34) pour le coulisseau (14).

11. Ensemble coulissant selon l'une quelconque des revendications précédentes, **caractérisé en ce qu'**il comporte des moyens de déplacement (36, 38, 40) pour déplacer le coulisseau (14) le long du rail (16).

12. Ensemble coulissant selon la revendication précédente, **caractérisé en ce que** les moyens de déplacement (36, 38, 40) comportent au moins un moteur (38) et un câble de transmission (40, 40A, 40B) qui est relié au coulisseau (14) et qui est actionné par ledit moteur (38).

13. Ensemble coulissant selon la revendication précédente, **caractérisé en ce qu'**il comporte des moyens formant guidage (42A, 42B, 34) pour le câble (40).

14. Ensemble coulissant selon l'une quelconque des revendications précédentes, **caractérisé en ce qu'**il comporte une pluralité de coulisseaux (14) reliés entre eux par des moyens formant liaison (42, 44).

15. Ensemble coulissant selon la revendication précédente, **caractérisé en ce que** les moyens formant liaison (42, 44) comportent une liaison (44) choisie parmi les liaisons rotule et pivot longitudinal.

16. Ensemble coulissant selon l'une quelconque des revendications précédentes, **caractérisé en ce qu'**il comporte en outre des moyens de blocage (46) du coulisseau (14) par rapport au rail (16).

17. Ensemble de mobilier coulissant pour habitacle de véhicule, **caractérisé en ce qu'**il comporte un ensemble coulissant (10) selon l'une quelconque des revendications précédentes, dont le rail (16) est apte à être monté sur une paroi (20) de l'habitacle du véhicule, et un élément de mobilier (12) relié au coulisseau (14).

18. Ensemble de mobilier coulissant pour habitacle de véhicule, selon la revendication 17, **caractérisé en ce que** l'élément de mobilier est un siège de véhicule (12) et **en ce que** le rail (16) est relié au plancher (20) de l'habitacle du véhicule.

19. Ensemble de mobilier coulissant pour habitacle de véhicule, selon la revendication 17 ou 18, **caractérisé en ce qu'**il comporte deux ensembles coulissants (10) selon l'une quelconque des revendications 1 à 16.

## Claims

1. Slide assembly, in particular for a vehicle interior, including at least one longitudinal rail (16) and at least one slider (14) comprising a pair of lateral jaws (32, 32A, 32B) each containing a plurality of balls (24) capable of being rolled against the rail (16) to permit movement of the slider (14) along the rail (16), **characterised in that** the jaws (32A, 32B) of the slider (14) are articulated with respect to each other, and **in that** the slider also includes elastic means of pressure (28) acting on each of the jaws (32A, 32B) of the slider (14) to ensure contact between at least one ball (24) of each jaw (32A, 32B) of the slider (14) and the rail (16).

2. Slide assembly according to the preceding claim, **characterised in that** the rail (16) presents at least one curved part (C1, C2) in which the slider (14) moves.

3. Slide assembly according to claim 1 or 2, **characterised in that** the jaws (32, 32A, 32B) of the slider (14) are articulated by an articulation forming a longitudinal pivot (30, 30A, 30B).

4. Slide assembly according to any one of the preceding claims, **characterised in that** the elastic means of pressure (28) include a spring (28) permitting the balls (24) of one of the jaws (32A, 32B) to be moved with respect to the balls (24) of the other of the jaws (32A, 32B) to ensure contact between at least one ball (24) of each jaw (32A, 32B) and the rail (16).

5. Slide assembly according to the preceding claim, **characterised in that** the spring is a helical spring (28) comprising a first free end (28A) which cooperates with one of the two jaws (32A) and a second free end (28B) which cooperates with the other of the two jaws (32B).

6. Slide assembly according to any one of the preceding claims, **characterised in that** the rail (16) includes a groove (18) inside which the balls (24) are capable of moving, at least one ball (24) of each jaw (32A, 32B) being in contact with a wall (26) of the groove (18).

7. Slide assembly according to claims 4 and 5, **characterised in that** the spring (28) acts on the jaws (32, 32A, 32B), parting the balls (24) of one of the jaws (32A, 32B) from the balls (24) of the other of the jaws (32A, 32B), so that the balls (24) remain in contact with the walls of the groove.

8. Slide assembly according to claim 4, **characterised in that**, in cross-section, the balls (24) and the spring (28) are arranged in a V, the spring (28) being placed at the foot of the V and the balls (24) of each of the jaws (32A, 32B) being placed respectively at each end of the V.

9. Slide assembly according to any one of the preceding claims, **characterised in that** the slider (14) includes two jaws (32, 32A, 32B) and **in that** each jaw (32A, 32B) includes two balls (24).

10. Slide assembly according to any one of the preceding claims, **characterised in that** it also includes means forming an end stop (34) for the slider (14).

11. Slide assembly according to any one of the preceding claims, **characterised in that** it includes means of movement (36, 38, 40) to move the slider (14) along the rail (16).

12. Slide assembly according to the preceding claim, **characterised in that** the means of movement (36, 38, 40) include at least one motor (38) and one transmission cable (40, 40A, 40B) which is connected to the slider (14) and which is activated by said motor (38).

13. Slide assembly according to the preceding claim, **characterised in that** it includes means forming guidance (42A, 42B, 34) for the cable (40).

14. Slide assembly according to any one of the preceding claims, **characterised in that** it includes a plurality of sliders (14) connected together by means forming a link (42, 44).

15. Slide assembly according to the preceding claim, **characterised in that** the means forming a link (42, 44) include a link (44) selected from swivel and longitudinal pivot links.

16. Slide assembly according to any one of the preceding claims, **characterised in that** it also includes means of locking (46) the slider (14) with respect to the rail (16).

17. Furniture with slide assembly for a vehicle interior, **characterised in that** it includes a slide assembly (10) according to any one of the preceding claims, the rail (16) of which is capable of being mounted on a wall (20) of the vehicle interior, and a furniture element (12) connected to the slider (14).

18. Furniture with slide assembly for a vehicle interior, according to claim 17, **characterised in that** the furniture element is a vehicle seat (12) and **in that** the rail (16) is connected to the floor (20) of the vehicle interior.

19. Furniture with slide assembly for a vehicle interior, according to claim 17 or 18, **characterised in that** it includes two slide assemblies (10) according to any one of claims 1 to 16.

## Patentansprüche

1. Gleitanordnung, insbesondere für einen Fahrzeuginnenraum, umfassend wenigstens eine Längsschiene (16) und wenigstens einen Schieber (14), der ein Paar von seitlichen Backen (32, 32A, 32B) umfasst, von denen jede eine Vielzahl von Kugeln (24) umfasst, die geeignet sind, gegen die Schiene (16) zu rollen, um eine Bewegung des Schiebers (14) entlang der Schiene (16) zu ermöglichen,
**dadurch gekennzeichnet, dass** die Backen (32A, 32B) des Schiebers (14) miteinander gelenkartig verbunden sind, und
dass der Schieber außerdem elastische Druckmittel (28) umfasst, die auf jede der Backen (32A, 32B) des Schiebers (14) wirken, um einen Kontakt zwischen wenigstens einer Kugel (24) jeder Backe (32A, 32B) des Schiebers (14) und der Schiene (16) zu gewährleisten.

2. Gleitanordnung gemäß dem vorhergehenden Anspruch, **dadurch gekennzeichnet, dass** die Schiene (16) wenigstens eine Krümmung (C1, C2) aufweist, in der der Schieber (14) sich bewegt.

3. Gleitanordnung gemäß dem Anspruch 1 oder 2, **dadurch gekennzeichnet, dass** die Backen (32, 32A, 32B) des Schiebers (14) gelenkartig durch ein eine Längsdrehachse (30, 30A, 30B) bildendes Gelenk verbunden sind.

4. Gleitanordnung gemäß einem der vorhergehenden Ansprüche, **dadurch gekennzeichnet, dass** die elastischen Druckmittel (28) eine Feder (28) umfassen, die ermöglicht, die Kugeln (24) der einen der Backen (32A, 32B) bezüglich der Kugeln (24) der anderen der Backen (32A, 32B) zu bewegen, um einen Kontakt zwischen wenigstens einer Kugel (24) jeder Backe (32A, 32B) und der Schiene (16) zu gewährleisten.

5. Gleitanordnung gemäß dem vorhergehenden Anspruch, **dadurch gekennzeichnet, dass** die Feder eine schraubenförmige Feder (28) ist, die ein erstes freies Ende (28A) umfasst, das mit der einen der beiden Backen (32A) zusammenwirkt, und eine zweites freies Ende (28B), das mit der anderen der beiden Backen (32B) zusammenwirkt.

6. Gleitanordnung gemäß einem der vorhergehenden Ansprüche, **dadurch gekennzeichnet, dass** die Schiene (16) eine Rille (18) umfasst, in deren Inneren die Kugeln (24) geeignet sind, sich zu bewegen, wobei wenigstens eine Kugel (24) jeder Backe (32A, 32B) in Kontakt mit einer Wand (26) der Rille (18) ist.

7. Gleitanordnung gemäß den Ansprüchen 4 und 5, **dadurch gekennzeichnet, dass** die Feder (28) auf die Backen (32, 32A, 32B) wirkt, indem sie die Kugeln (2) der einen der Backen (32A, 32B) von den Kugeln (24) der anderen der Backen (32A, 32B) entfernt, damit die Kugeln in Kontakt mit den Wänden der Rille bleiben.

8. Gleitanordnung gemäß Anspruch 4, **dadurch gekennzeichnet, dass** im Querschnitt die Kugeln (24) und die Feder (28) in V-Form angeordnet sind, wobei die Feder (28) am Fuße des V angeordnet ist und die Kugeln (24) jeder der Backen (32A, 32B) jeweils an jedem Ende des V angeordnet sind.

9. Gleitanordnung gemäß einem der vorhergehenden Ansprüche, **dadurch gekennzeichnet, dass** der Schieber (14) zwei Backen (32, 32A, 32B) umfasst und dass jede Backe (32A, 32B) zwei Kugeln (24) umfasst.

10. Gleitanordnung gemäß einem der vorhergehenden Ansprüche, **dadurch gekennzeichnet, dass** sie außerdem Mittel umfasst, die einen Endanschlag (34) für den Schieber (14) bilden.

11. Gleitanordnung gemäß einem der vorhergehenden Ansprüche, **dadurch gekennzeichnet, dass** sie Bewegungsmittel (36, 38, 40) umfasst, um den Schieber (14) entlang der Schiene (16) zu bewegen.

12. Gleitanordnung gemäß dem vorhergehenden Anspruch, **dadurch gekennzeichnet, dass** die Bewegungsmittel (36, 38, 40) wenigstens einen Motor (38) umfassen und ein Transmissionskabel (40, 40A, 40B) umfassen, das mit dem Schieber (14) verbunden ist und das von dem Motor (38) angetrieben wird.

13. Gleitanordnung gemäß dem vorhergehenden Anspruch, **dadurch gekennzeichnet, dass** sie Mittel umfasst, die eine Führung (42A, 42B, 34) für das Kabel (40) bilden.

14. Gleitanordnung gemäß einem der vorhergehenden Ansprüche, **dadurch gekennzeichnet, dass** sie eine Vielzahl von Schiebern (14) umfasst, die untereinander durch verbindungsbildende Mittel (42, 44) verbunden sind.

15. Gleitanordnung gemäß dem vorhergehenden Anspruch, **dadurch gekennzeichnet, dass** die verbindungsbildenden Mittel (42, 44) eine Verbindung (44) umfassen, die gewählt ist aus den Verbindungen Kugelgelenk und Längsdrehachse.

16. Gleitanordnung gemäß einem der vorhergehenden Ansprüche, **dadurch gekennzeichnet, dass** sie außerdem Mittel zur Blockierung (46) des Schiebers (14) bezüglich der Schiene (16) umfasst.

17. Möbelstück mit Gleitanordnung für Fahrzeuginnenraum, **dadurch gekennzeichnet, dass** es eine Gleitanordnung (10) gemäß einem der vorhergehenden Ansprüche umfasst, deren Schiene (16) geeignet ist, auf eine Wand (20) des Fahrzeuginnenraums montiert zu werden, sowie ein mit dem Schieber (14) verbundenes Möbelelement (12).

18. Möbelstück mit Gleitanordnung für Fahrzeuginnenraum gemäß Anspruch 17, **dadurch gekennzeichnet, dass** das Möbelelement ein Fahrzeugsitz (12) ist und dass die Schiene (16) mit dem Fußboden (20) des Fahrzeuginnenraums verbunden ist.

19. Möbelstück mit Gleitanordnung für Fahrzeuginnenraum gemäß Anspruch 17 oder 18, **dadurch gekennzeichnet, dass** es zwei Gleitanordnungen (10) gemäß einem der Ansprüche 1 bis 16 umfasst.
